# EUROPEAN PATENT APPLICATION

(11) **EP 2 481 922 A1**
(43) Date of publication of application: **01.08.2012**
(21) Application number: 12075006.2
(22) Date of filing: 20.01.2012
(51) Int. Cl.: F03D 7/02, F03D 7/04

(54) **Pitch control system and method for wind turbine**

(30) Priority: 30.01.2011 CN 201110033400
(71) Applicant: Sinovel Wind Group Co., Ltd, Haidian District, Beijing 100872 (CN)
(72) Inventor: Chen, Xi, Haidian District, Beijing 100872 (CN); Li, Lei, Haidian District, Beijing 100872 (CN); Cai, Xuan, Haidian District, Beijing 100872 (CN)
(74) Representative: Pfenning, Meinig & Partner GbR

(57) **Abstract**

The invention discloses a pitch control system for a wind turbine and a method, comprising a main controller, a secondary controller, a motor and a pitch gearbox, wherein the main controller is connected with a plurality of the secondary controllers through a communication bus; each blade corresponds to one controller and at least two motors, and one pitch gearbox is driven by each motor. The main controller is used for calculating a pitch expected value according to wind speed as well as power and rotation speed of a generator; and the motor is driven by the secondary controller according to the pitch expected value, so as to drive the pitch gearbox and hence drive the blades to vary a pitch angle.

## Description

### FIELD OF THE TECHNOLOGY

The present invention relates to the wind power field, specifically to a pitch control system and method for a wind turbine.

### BACKGROUND

In a superpower wind turbine, pitch angle of a blade on a hub is adjusted by a pitch control system. The pitch angle is adjusted according to changes of wind speed so as to control wind energy absorbed by the wind turbine, thus increasing efficiency of the whole wind turbine, maintaining the stability of power and speed of the wind turbine and effectively reducing wind turbine load.

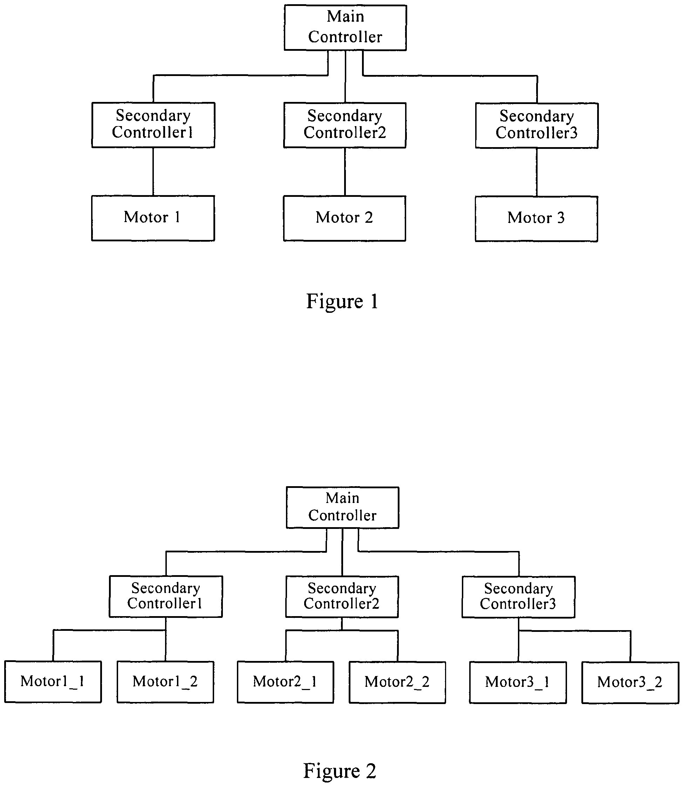

Figure 1 is a structural schematic diagram of a pitch control system of a wind turbine in relevant technique. As for the pitch control system, generally, the pitch angle is calculated by a main controller of the wind power generator, and then instructions are transmitted to a pitch converter corresponding to each blade. The corresponding motor motion is controlled by the pitch converter, thus driving a pitch gearbox to rotate. Finally, the blade is driven to rotate through rigidity meshing between a pinion of the pitch gearbox and the main gear rim of a pitch bearing. Figure 1 shows that the main controller is connected with three secondary controllers; that is, the secondary controller 1, the secondary controller 2 and the secondary controller 3. Every motor is controlled by each secondary controller respectively; that is, the motor 1, the motor 2 and the motor 3 are respectively controlled. Every blade is driven by each motor respectively to rotate so as to adjust the pitch angle.

With increase of power per unit of the wind turbine, the length of the blade is continuously increased too, thus facilitating the power required by the pitch drive to be continuously increased. The requirements, such as torque requirements of a corresponding pitch motor and the gearbox, rigidity requirement of the main gear rim of the bearing, and so on, are also increased continuously. However, there is certain difficulty to design the corresponding electrical and mechanical apparatuses to realize a pitch system for a superpower wind power generator.

### SUMMARY

The present invention provides a pitch control system and method for a wind turbine. The pitch drive problem of a superpower wind turbine is solved without adding electrical and mechanical burdens.

One aspect of the invention provides a pitch control system for a wind turbine, comprising a main controller, a secondary controller, a motor and a pitch gearbox. The main controller is connected with a plurality of the secondary controllers through a communication bus; each blade corresponds to one controller and at least two motors, and one pitch gearbox is driven by each motor. The main controller is used for calculating a expected value of a blade angle according to power and rotation speed of the generator. The motor is driven by the secondary controller according to the expected value to drive the pitch gearbox and hence drive the blades to vary pitch angle.

Preferably, the above communication bus is a CAN bus.

Preferably, the above main controller is a PLC.

Preferably, the above secondary controller is a frequency converter.

Preferably, closed loop control is implemented for speed by the abovementioned frequency converter according to position feedback values of respective encoders of at least two motors, specifically comprising:

When the difference between the position feedback values of the respective encoders of at least two motors is bigger than a preset threshold value, failure is reported as well as feathering and halt are implemented. Otherwise, the closed loop control is implemented for the speed according to an average value of the position feedback values.

Preferably, at least two pitch gearboxes, which correspond to each blade, are respectively meshed with a main gear rim of a bearing of the blade and distributed evenly along the periphery of the main gear rim of the bearing.

Preferably, each the secondary controller is correspondingly connected with at least two motors, of which input ends are connected in parallel at the output end of the secondary controller.

Preferably, the wind turbine is a superpower wind turbine with generated power of more than 6 megawatt.

Another aspect of the present invention provides a pitch control method, comprising the following steps:

A main controller calculates a pitch expected value of a blade according to wind speed as well as power and rotation speed of a generator; furthermore, the pitch expected value is transmitted to a secondary controller by the main controller;

At least two motors are driven by the secondary controller according to the pitch expected value, so as to drive the corresponding pitch gearbox;

The corresponding blade is driven by each pitch gearbox through a meshed and transmission method to implement pitch operation.

Preferably, step, in which at least two motors are driven by the secondary controller according to the pitch expected value, comprises;

One motor control signal is produced by the secondary controller according to the pitch expected value;

The motor control signal is respectively transmitted to at least two motors to drive the motor to rotate.

With the technical solution provided by each embodiment of the present invention, a plurality of motors are adopted to drive each blade of the superpower wind turbine, which can be completed only by an original pitch motor with relatively small power as well as a gearbox. Therefore, the pitch can become more stable, the requirement for the pitch drive power of the wind turbine with superpower is met. At the same time, mechanical load of the gearbox is not added; rigidity requirement of the main gear rim of a pitch bearing is not increased. Hence, the problem of pitch drive of the superpower wind turbine is basically resolved without adding electrical and mechanical burdens.

### BRIEF DESCRIPTION OF THE DRAWINGS

In order that the embodiments of the invention or the technical proposal of the prior art is described more clearly, the drawings needed in describing the embodiments or the prior art are briefly introduced in the followings. It is apparent that the following described drawings only show some embodiments of the invention. Those skilled in the art can also obtain other drawings according to these drawings without any creative work.

Figure 1 is a structural schematic diagram of a pitch control system of a wind power generator in prior art.

Figure 2 is a schematic diagram of a pitch control system for a wind turbine according to an embodiment of the present invention.

### DETAILED DESCRIPTION

The technical solution of the embodiments of the invention will be described more clearly and completely in combination with the drawings of the embodiments of the invention. Obviously, the embodiments described here are part of the embodiments of the invention and not all of the embodiments. Based on the embodiments of the invention, all of other embodiments obtained by those skilled in the art without creative work are within the scope protected by the invention.

Figure 2 is a schematic diagram of a pitch control system for a wind turbine according to an embodiment of the present invention. As shown in Figure 2, the pitch control system comprises a main controller, a secondary controller, a motor and a pitch gearbox (not shown). Specifically, a servo motor may be taken as the motor.

The main controller is connected with a plurality of the secondary controllers through a communication bus; each blade corresponds to one controller and at least two motors, and one pitch gearbox is driven by each motor;

The main controller is used for calculating expected value of the blade according to wind speed as well as power and rotation speed of a generator.

The motor is driven by the secondary controller according to the pitch expected value, so as to drive the pitch gearbox and hence drive the blades to vary a pitch angle.

In the embodiment, the main controller (a master station) is used for calculating pitch expected value according to wind speed as well as power and rotation speed of a generator; the pitch expected value is transmitted to the secondary controller (a slave station of a pitch system) in a wheel hub through a communication system; as for each blade, two or a plurality of the motors are driven by one secondary controller at the same time, and one pitch gearbox is driven by each motor, thus realizing a pitch control function. Furthermore, current operation status of the pitch system is fed back to the master station by the slave station of the pitch system. Two or a plurality of the motors are driven by one secondary controller at the same time; Specifically, a motor control signal is generated by the secondary controller and transmitted to a plurality of the motors to realize the simultaneous drive at the same time.

For example, each secondary controller may be correspondingly connected with at least two motors, of which input ends are connected in parallel at the output end of the secondary controller, thus guaranteeing that the motor control signals output to each motor are the same.

In the above embodiments, each blade of the superpower wind turbine is driven by a plurality of the motors. One pitch gearbox is driven by each motor. These motors and pitch gearboxes are smaller power than these when one motor and one pitch gearbox are used in superpower wind turbine; especially, the pitch can become more stable. The method is meeting the requirement of the pitch drive power of the superpower wind turbine. Meanwhile, the mechanical burden of the gearbox is not added, and the rigidity requirement of the main gear rim of the pitch bearing is not increased either. The pitch drive problem of the superpower wind turbine can be solved without adding electrical and mechanical burdens. The effect of the technical solution is more prominent advantage with the increased power of wind turbine. The wind turbine used in the present invention is preferably a superpower wind turbine with generated power of more than 6 megawatt.

In the above mentioned solution, at least two pitch gearboxes, which correspond to each blade, may be respectively meshed with a main gear rim of a bearing of the blade and distributed evenly along the periphery of the main gear rim of the bearing.

The power for driving the blade can be guaranteed by the above mentioned pitch drive system to be the sum of the powers of two or a plurality of the pitch motors. However, at the same time, power of single pitch gearbox is not hence increased, and the load born at the place where the main gear rim of the bearing and the pinion of the pitch gearbox are meshed with each other is not increased either.

If a traditional control solution, in which one frequency converter mesh one motor, is adopted by each blade, and as there is difference between respective characteristics of the pitch motor and the frequency converter, the difference of the operation indexes of each motor may be generated and cause to be asynchronous, thus generating phenomena such as too high instantaneous load or short-term load of a pitch motor, too big released energy, increase mechanical load of a system, and so on.

Data transited between the pitch system and the master station comprise signals such as given expectation, position measurement, temperature measurement, voltage measurement, digital input and digital output, and so on. Two or more motors are corresponded to each blade in the pitch system and containing position feedbacks are taken as the pitch motor to realize accurate pitch purpose. A function of position feedbacks can be realized through a position sensor provided on a motor shaft of the motor. Rotation position of the motor can be detected by the sensor, and a rotation position of the blade can be further calculated.

The pitch angle of a blade must be controlled by the pitch control system of the wind turbine when the control system is operated, and operation state and various index of the pitch system are monitored in real time.

The pitch control system in the present embodiment belongs to a distributed type control system. The main controller positioned in a cabin is responsible for collecting and processing data and actively transiting instructions, and the secondary controller only passively executes the instructions. Furthermore there is no direct relation between the secondary controllers. When there are three secondary controllers, correspondent node addresses of the main controller and three secondary controllers may be provided at the same time and are respectively 1, 2, 3 and 4, thus carrying out communication conveniently. Figure 2 shows that one main controller is respectively connected with three secondary controllers; that is, the secondary controller 1, the secondary controller 2 and the secondary controller 3. Two motors are driven by each secondary controller respectively. The motors 1_1 and 1_2 are controlled by the secondary controller 1; the motors 2_1 and 2_2 are controlled by the secondary controller 2, and the motors 3_1 and 3_2 are controlled by the secondary controller 3.

Different stations are respectively controlled by the distributed type control system according to predefined design scheme and different control tasks. At the same time, all of the control stations are connected with each other through a communication network. An upper-level control station is connected with a lower-level control station through the communication network, thus realizing control and monitoring for on-site conditions.

In the distributed type system, a PLC can be taken as the main controller and the pitch converter can be taken as the secondary controller. The pitch converter has a communication interface to the PLC, that is, a CAN bus communication interface. The CAN bus is taken as a communication system between the main controller and each secondary controller.

For example, a speed open-loop control method can be adopted by the frequency converter, and speed close-loop control is carried out through feedbacks of an encoder. As it is rigidity connection, position feedback values of the respective encoder of two or a plurality of the pitch motors shall be closed very much. If the difference of the values is too large, failures are reported as well as feathering and halt are carried out. If the difference is very small, their average values can be taken as the position feedback, which is not only accurate but also enhances security of the system. In addition, output current can be detected by the pitch frequency converter which carries out necessary protection functions such as over current protection, and so on. Therefore, not only coordination of the system can be guaranteed (that is, synchronous driving movement of two or more motors), but also rapidity and accuracy of a system response as well as reliability of the system are guaranteed.

An embodiment of the present invention further provides a pitch control method, which is preferably carried out by the abovementioned pitch control system and specifically comprises the following steps:

The main controller calculates pitch expected value of the blade according to wind speed as well as power and rotation speed of a generator; and transmits the pitch expected value to the secondary controller;

At least two motors are driven by the secondary controller according to the pitch expected value, so as to drive the corresponding pitch gearbox;

The corresponding blade is driven by each pitch gearbox through a meshed and transmission method to carry out pitch operation.

In the abovementioned method, step, in which at least two motors are driven by the secondary controller according to the pitch expected value, specifically comprises:

One motor control signal is produced by the secondary controller according to the pitch expected value;

The motor control signal is respectively transmitted to at least two motors to drive the motor to rotate.

Those skilled in the prior art will understand that: the drawing is only a schematic diagram of one embodiment. Modules or steps in the drawings are not necessarily a must when carrying out the invention.

Those skilled in the prior art will understand that: the modules in the devices of the embodiments can be distributed in the devices of the embodiments according to the description of the embodiments, and also can be placed in one or a plurality of the devices of different embodiments. The modules of the abovementioned embodiments can be integrated as one module, and also can be further divided into a plurality of sub-modules.

Finally, it shall be explained as follows: the abovementioned embodiments are only used to explain the technical proposal of the invention but not to limit it. Although the invention is explained in details with the reference to the abovementioned embodiments, those skilled in the prior art shall understand that: they still can modify the technical proposal recorded in the various abovementioned embodiments or carry out equivalent substitution for part of the technical characteristics. And these modifications or substitutions shall not facilitate the nature of the corresponding technical proposal to be departed from the spirit and scope of the technical proposal of the embodiments of the invention.

## Claims

1. A pitch control system for a wind turbine, comprising a main controller, a plurality of secondary controllers, a plurality of motors and a plurality of pitch gearboxes, wherein
the main controller is connected with a plurality of the secondary controllers through a communication bus; each blade corresponds to one of the secondary controllers and at least two of the motors and each of pitch gearboxes is driven by one of the motors;
the main controller is configured for calculating a pitch expected value according to wind speed as well as power and rotation speed of a generator; and
the motors are driven by the secondary controllers according to the pitch expected value, so as to drive the pitch gearbox and hence drive the blade to vary a pitch angle.

2. The pitch control system of claim 1, wherein the communication bus is a CAN bus.

3. The pitch control system of claim 1, wherein the main controller is a PLC.

4. The pitch control system of claim 1, wherein the secondary controllers are frequency converter.

5. The pitch control system of claim 4, wherein a closed loop speed control is implemented by the secondary controllers according to position feedback values of respective encoders of at least two of the motors, which comprising:
when difference between the position feedback values of the respective encoders of at least two motors is bigger than a preset threshold value, reporting failure, feathering and halting; otherwise, implementing closed loop speed control according to an average value of the position feedback values.

6. The pitch control system of anyone of claims 1-5, wherein the at least two pitch gearboxes, which correspond to each blade, are respectively meshed with a main gear rim of a bearing of the blade and distributed evenly along the periphery of the main gear rim of the bearing.

7. The pitch control system of anyone of claims 1-5, wherein each of the secondary controllers is correspondingly connected with at least two of the motors, of which input ends are connected in parallel at an output end of the secondary controller.

8. The pitch control system of anyone of claims 1-5, wherein the wind turbine is asuperpower wind turbine with generated power of more than 6 megawatt.

9. A pitch control method, comprising:
a main controller calculating a pitch expected value of a blade according to wind speed as well as power and rotation speed of a generator; and transmitting the pitch expected value to a secondary controller;
the secondary controller driving at least two motors to rotate according to the pitch expected value, so as to drive a corresponding pitch gearbox; and
each pitch gearbox driving a corresponding blade to implement pitch operation through a meshed and transmission method.

10. The pitch control method of claim 9, wherein step, in which the secondary controller drives at least two motors to rotate according to the pitch expected value, comprises:
the secondary controller producing one motor control signal according to the pitch expected value; and
transmitting the motor control signal respectively to at least two motors to drive the motors to rotate.
